# FASCICULE DE BREVET EUROPEEN

(11) **EP 4 154 394 B1**
(45) Date de publication et mention de la délivrance du brevet: **10.07.2024**
(21) Numéro de dépôt: 21725229.5
(22) Date de dépôt: 18.05.2021
(51) Int. Cl.: H02P 3/12

(54) **DISPOSITIF DE FREINAGE D'OUTIL EN ROTATION DANS UN APPAREIL DE PRÉPARATION CULINAIRE**
VORRICHTUNG ZUM ABBREMSEN EINES ROTIERENDEN WERKZEUGES IN EINEM GARGERÄT
DEVICE FOR BRAKING A ROTATING TOOL IN A COOKING APPARATUS

(30) Priorité: 18.05.2020 FR 2004926
(43) Date de publication de la demande: 29.03.2023
(73) Titulaire: Hameur, 2412 Luxembourg (LU)
(72) Inventeur: CALANGE, Yves, 71300 MONTCEAU LES MINES (FR); MICHEL, Marie, 71230 SAINT ROMAIN SOUS GOURDON (FR)
(74) Mandataire: Cornuejols, Marine Sophie
(86) Numéro de dépôt international: PCT/EP2021/063159
(87) Numéro de publication internationale: WO 2021/233920

(56) Documents cités:
- EP-A2- 1 580 877
- EP-B1- 1 580 877
- WO-A1-95/02276
- US-A- 3 673 481

## Description

### DOMAINE TECHNIQUE DE L'INVENTION

La présente invention vise un dispositif de freinage d'outil en rotation dans un appareil de préparation culinaire. Elle s'applique, notamment, au domaine des appareils de préparation culinaire domestiques ou professionnels.

### ETAT DE LA TECHNIQUE

Les appareils de préparation culinaire munis d'un outil tournant comportent un moteur d'entraînement de l'outil. Ce moteur est constitué d'un stator et d'un rotor. Le stator crée une magnétisation longitudinale fixe à l'aide d'enroulements (inducteur) ou d'aimants permanents. Le rotor est constitué d'un ensemble de bobines reliées à un collecteur rotatif. Le collecteur rotatif permet de maintenir fixe la direction transversale de magnétisation du rotor lorsque celui-ci tourne. Grâce à ce dispositif, les magnétisations, rotorique et statorique, sont toujours décalées de façon optimale (en quadrature). Ce décalage provoque un couple selon la loi du flux maximum (un pôle nord attire un pôle sud), provoquant ainsi la rotation du rotor.

Dans un appareil de préparation culinaire, il est nécessaire de prévoir un freinage rapide de l'outil pour des raisons de sécurité. En particulier, si l'utilisateur ouvre le couvercle d'une cuve où se trouve l'outil, par exemple un couteau tournant, il faut que ce couteau soit arrêté avant que l'utilisateur puisse plonger un couvert dans la cuve.

On considère, et les normes applicables le confirment, qu'il faut que l'arrêt se fasse en moins de deux secondes, cuve vide. En conséquence, la mise en roue libre du moteur, qui n'est plus alimenté électriquement, ne peut suffire à arrêter l'outil dans le délai de freinage requis. Les systèmes de freinage connus présentent une usure prématurée, plus particulièrement des charbons et du collecteur.

Pour freiner la rotation du moteur, il est connu de connecter les deux charbons (ou balais) du moteur électrique sur une seule bobine pour que le moteur devienne une dynamo. Cependant, ce freinage violent provoque des étincelles sur les charbons et un vieillissement similaire du moteur.

Le document EP 1 580 877 décrit un appareil qui dispose d'un circuit électrique avec un dispositif hacheur. Le circuit comporte deux interrupteurs à commande mécanique ayant deux bornes qui sont connectées à deux bornes d'un enroulement, et à une source de tension continue et aux bornes du rotor respectivement. Le circuit comporte une résistance qui est temporairement en parallèle avec deux enroulements et le rotor, si les interrupteurs s'ouvrent simultanément.

### OBJET DE L'INVENTION

La présente invention vise à remédier à tout ou partie de ces inconvénients.

A cet effet, selon un premier aspect, la présente invention vise un dispositif de freinage d'un moteur électrique comportant un rotor muni de deux balais et un stator comportant deux demi bobines reliées en série avec les balais lors de l'activation nominale du moteur, dispositif qui comporte un moyen de mise en sous-alimentation du moteur, un moyen de liaison, en série, d'une seule demi bobine avec les balais du rotor et un moyen de commande de freinage par la mise en sous-alimentation du moteur jusqu'à ce qu'au moins une valeur d'une grandeur physique atteigne une valeur prédéterminée et la liaison, en série, de ladite seule demi bobine avec les balais du rotor lorsque la valeur d'une grandeur physique atteint la valeur prédéterminée.

La sous-alimentation du moteur est définie comme une alimentation électrique de puissance inférieure à la puissance nécessaire au maintien de la vitesse de rotation du moteur. Cette puissance est, dans de nombreux moteurs électriques, commandée par le voltage appliqué au moteur. La sous-alimentation consiste en une rampe de réduction de puissance, une réduction de puissance par étages, ou en une coupure de l'alimentation électrique du moteur, aussi appelée « roue libre ».

La phase de sous-alimentation, ou freinage « passif », permet de faire diminuer la vitesse de rotation du moteur grâce aux frottements du moteur, de l'arbre et de l'outil monté sur l'arbre. Lorsque cette vitesse a suffisamment diminué, par exemple lorsqu'elle est inférieure à une vitesse prédéterminée ou qu'une durée sous-alimentation a atteint une valeur prédéterminée, le collecteur du rotor est directement connecté, par l'intermédiaire des balais, sur ladite seule demi-bobine du stator, ce qui constitue un freinage dit « actif ». Au cours du freinage actif, le rotor est alors générateur de tension continue. Cette tension générée par le rotor est injectée dans la demi-bobine qui se trouve reliée en série, ce qui provoque le freinage rapide du rotor sans générer d'étincelle. On note que le passage à la phase de freinage actif peut aussi dépendre de signaux reçus de détecteurs de défauts de sécurité intégrés.

Dans des modes de réalisation, le moyen de mise en sous-alimentation du moteur est configuré pour mettre en roue libre le moteur.

Grâce à ces dispositions, la sous-alimentation est facile a réalisée puisqu'elle consiste à arrêter d'alimenter le moteur électrique. De plus, le freinage est plus rapide qu'avec une réduction progressive de la puissance électrique fournie au moteur.

Dans des modes de réalisation, une grandeur physique est la vitesse de rotation du moteur électrique et la valeur prédéterminée est inférieure à la vitesse nominale de rotation du moteur.

Ces modes de réalisation réduisent le risque d'étincelles dans le moteur pendant le freinage actif. Ces modes de réalisation sont particulièrement adaptés aux moteurs à vitesse variable et aux appareils onéreux.

Dans des modes de réalisation, la valeur prédéterminée de la vitesse est supérieure à la moitié de la vitesse de rotation nominale du moteur électrique.

Dans des modes de réalisation, une grandeur physique est la durée écoulée depuis la mise en sous-alimentation du moteur électrique.

Ces modes de réalisation permettent de garantir que la durée totale de freinage est inférieure à une durée réglementaire. Cette variante a aussi l'avantage de ne pas nécessiter de tachymètre. Elle peut notamment s'appliquer à des appareils de préparation culinaire à vitesse unique, par exemple des moulins à café, à faible coût de revient.

Dans des modes de réalisation, la valeur prédéterminée de la durée écoulée depuis la mise en sous-alimentation libre du moteur électrique est comprise entre 0,2 seconde et une seconde et demi.

Dans des modes de réalisation, le moyen de liaison, en série, de la seule demi-bobine avec les balais du rotor comporte :
- deux contacts synchronisés à commutation simultanée et
- une résistance électriquement placée entre une borne du contact inverseur, d'une part, et une connexion entre une demi-bobine et une borne du contact inverseur, d'autre part.

Ces modes de réalisation ont l'avantage d'être faciles à mettre en oeuvre, avec des composants de faible coût.

Dans des modes de réalisation, le moyen de liaison, en série, de la seule demi-bobine avec les balais du rotor est configuré pour connecter directement un collecteur du rotor, par l'intermédiaire des balais, sur ladite seule demi-bobine du stator, le rotor étant alors générateur d'une tension continue injectée dans ladite demi-bobine.

Ces modes de réalisation ont l'avantage d'être faciles à mettre en oeuvre, avec des composants de faible coût.

Selon un deuxième aspect, la présente invention vise un appareil de préparation culinaire comportant un moteur électrique de mise en rotation d'un outil dans une cuve et un dispositif de freinage de l'outil objet de l'invention.

Selon un troisième aspect, la présente invention vise un procédé de freinage d'un moteur électrique comportant un rotor muni de deux balais et un stator comportant deux demi-bobines reliées en série avec les balais lors de l'activation nominale du moteur, procédé qui comporte :
- une étape de mise en sous-alimentation du moteur jusqu'à ce qu'au moins une valeur d'une grandeur physique atteigne une valeur prédéterminée et
- une étape de liaison, en série, d'une seule demi-bobine (49) avec les balais du rotor lorsqu'une valeur de grandeur physique atteint la valeur prédéterminée.

Lorsque la mise en sous-alimentation consiste en une mise en roue libre, le procédé de freinage comporte :
- une étape de mise en roue libre du moteur jusqu'à ce qu'au moins une valeur d'une grandeur physique atteigne une valeur prédéterminée et
- une étape de liaison, en série, d'une seule demi-bobine avec les balais du rotor lorsqu'une valeur de grandeur physique dépasse la valeur prédéterminée.

Dans des modes de réalisation, l'étape de liaison, en série, de ladite seule demi-bobine avec les balais du rotor connecte directement un collecteur du rotor, par l'intermédiaire des balais sur ladite seule demi-bobine du stator, le rotor étant alors générateur d'une tension continue injectée dans ladite demi-bobine.

Les avantages, buts et caractéristiques particulières de cet appareil et de ce procédé étant similaires à ceux du dispositif objet de l'invention, ils ne sont pas rappelés ici.

### BREVE DESCRIPTION DES FIGURES

D'autres avantages, buts et caractéristiques particulières de l'invention ressortiront de la description non limitative qui suit d'au moins un mode de réalisation particulier de l'outil et de l'appareil objets de la présente invention, en regard des dessins annexés, dans lesquels :
La figure 1 représente, schématiquement, un appareil de préparation culinaire objet de l'invention,
La figure 2 représente les liaisons électriques de commande d'un moteur électrique tournant dans un sens horaire, pendant son activation, sa roue libre et son freinage,
La figure 3 représente les liaisons électriques de commande d'un moteur électrique tournant dans un sens horaire, pendant sa roue libre,
La figure 4 représente les liaisons électriques de commande d'un moteur électrique tournant dans un sens horaire, pendant son freinage,
La figure 5 représente les liaisons électriques de commande d'un moteur électrique tournant dans un sens anti-horaire, pendant son activation, sa roue libre et son freinage,
La figure 6 représente les liaisons électriques de commande d'un moteur électrique tournant dans un sens anti-horaire, pendant sa roue libre,
La figure 7 représente les liaisons électriques de commande d'un moteur électrique tournant dans un sens anti-horaire, pendant son freinage, et
La figure 8 représente des étapes d'un mode de réalisation particulier du procédé objet de l'invention.

### DESCRIPTION DES MODES DE REALISATION

La présente description est donnée à titre non limitatif, chaque caractéristique d'un mode de réalisation pouvant être combinée à toute autre caractéristique de tout autre mode de réalisation de manière avantageuse. Par ailleurs, chaque paramètre d'un exemple de réalisation peut être mis en oeuvre indépendamment d'autres paramètres dudit exemple de réalisation.

On note dès à présent que les figures ne sont pas à l'échelle.

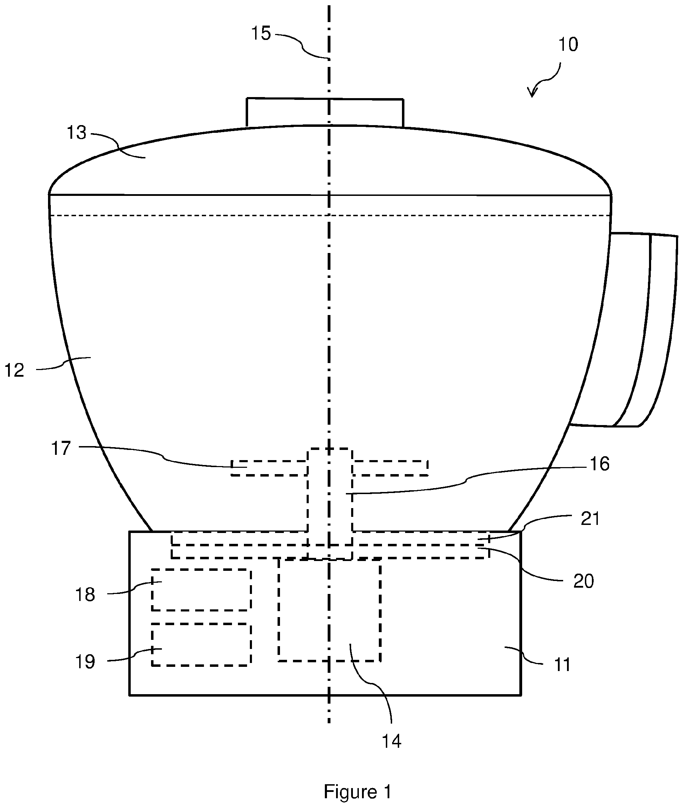

On observe, en figure 1, un appareil de préparation culinaire 10 qui comporte une cuve 12 montée sur un bloc moteur 11 et un couvercle 13 surmontant et fermant la cuve 12. Le bloc moteur 11, comporte un moteur 14 pour actionner un outil 17 monté sur un arbre 16 et positionné en fond de cuve 12. L'axe de rotation 15 du moteur 14, de l'arbre 16 et de l'outil 17 se trouve généralement confondu avec un axe de la cuve 12 et du couvercle 13.

Le bloc moteur 11 est éventuellement équipé d'une résistance chauffante 20 pour chauffer la préparation culinaire, généralement liquide ou pâteuse, dans la cuve 12, à travers le fond de cuve 21. L'appareil de préparation culinaire 10 étant représenté dans sa position d'utilisation, on appelle « haut » ou « supérieur », ce qui se trouve en haut de la figure 1 et « bas » ou « inférieur » ce qui se trouve en bas de cette figure. On appelle « intérieur » ou « interne », ce qui se trouve plus proche de l'axe 30 et « extérieur » ou « externe » ce qui se trouve plus éloigné.

Dans le bloc moteur 11 se trouve un circuit 18 de commande du fonctionnement du moteur, d'une part en fonction d'instructions données par un utilisateur par l'intermédiaire d'une interface utilisateur, par exemple un simple interrupteur ou un écran tactile et, d'autre part, en fonction d'états de capteurs de sécurité, par exemple de détection de présence d'une cuve verrouillée sur le bloc moteur et d'un couvercle verrouillé sur la cuve. Dans le bloc moteur 11 se trouve aussi un circuit d'activation 19, de mise en roue libre et de freinage du moteur.

Le moteur électrique comporte un rotor muni de deux balais et un stator comportant au moins deux demi-bobines reliées en série avec les balais lors de l'activation nominale du moteur.

Le dispositif de freinage du moteur comporte :
- un moyen de mise en sous-alimentation électrique du moteur,
- un moyen de liaison, en série, d'une seule demi-bobine avec les balais du rotor et
- un moyen de commande de freinage par la mise en sous-alimentation électrique du moteur jusqu'à ce qu'au moins une valeur d'une grandeur physique atteigne une valeur prédéterminée et la liaison, en série, d'une seule demi-bobine avec les balais du rotor lorsque la valeur d'une grandeur physique atteint la valeur prédéterminée.

Dans la suite de la description, on décrit en regard des figures, des modes de réalisation dans lesquels la mise en sous-alimentation électrique consiste en une mise en roue libre, c'est-à-dire un arrêt d'alimentation électrique du moteur. Cependant, l'homme du métier sait réaliser des rampes de décroissance ou des décroissances par étages de l'alimentation électrique sans qu'il soit nécessaire de les décrire ci-dessous. Des variantes mettant en oeuvre ces types de décroissance progressive de l'alimentation électrique du moteur sont signalées dans la description ci-dessous.

Dans les modes de réalisation représentés dans les figures, le dispositif de freinage du moteur comporte :
- un moyen de mise en roue libre du moteur,
- un moyen de liaison, en série, d'une seule demi-bobine avec les balais du rotor et
- un moyen de commande de freinage par la mise en roue libre du moteur jusqu'à ce qu'au moins une valeur d'une grandeur physique atteigne une valeur prédéterminée et la liaison, en série, d'une seule demi-bobine avec les balais du rotor lorsque la valeur d'une grandeur physique atteint la valeur prédéterminée.

Dans des modes de réalisation, une grandeur physique de déclenchement du freinage actif, par cette liaison, est la vitesse de rotation du moteur électrique et la valeur prédéterminée est inférieure à la vitesse nominale de rotation du moteur. Par exemple, la valeur prédéterminée de la vitesse est supérieure à la moitié de la vitesse de rotation nominale du moteur électrique.

Dans des modes de réalisation, éventuellement cumulatifs avec les précédents, une grandeur physique de déclenchement du freinage actif, par cette liaison, est la durée écoulée depuis la mise en roue libre du moteur électrique. Par exemple, la valeur prédéterminée de la durée écoulée depuis la mise en roue libre du moteur électrique est comprise entre 0,2 seconde et une seconde et demi.

Dans des variantes à décroissance progressive de l'alimentation électrique du moteur, une grandeur physique est la durée écoulée depuis la mise en sous-alimentation du moteur électrique.

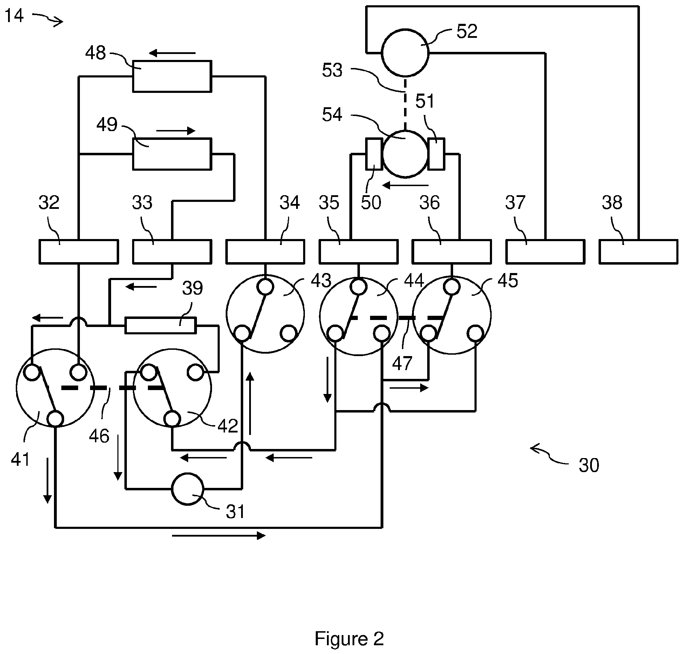

Un mode de réalisation 30 du circuit d'activation 19, de mise en roue libre et de freinage du moteur, est illustré en figures 2 à 7, lors de différentes phases de fonctionnement du moteur 14. Dans les figures 2 à 7, les flèches indiquent le sens du courant à travers les différents éléments électriques du moteur 14 et du circuit d'activation 19. Les lignes droites pleines représentent des liaisons électriques. Les contacts de ces lignes portant un demi-cercle signifient qu'il n'y a pas de connexion électrique. Les contacts de ces lignes ne portant pas de demi-cercle présentent une connexion électrique.

On observe, en figures 2 à 7, les composants électriques internes au moteur 14, au-dessus d'un bornier de moteur à sept bornes 32 à 38 et les composants électriques externes au moteur 14, en dessous de ce bornier.

Le moteur représenté dans ces figures est, par exemple, un moteur universel à deux sens de rotation ayant une vitesse de rotation variable de 0 à 12 600 tours par minute. Un moteur universel (ou « moteur série ») fonctionne nominalement lorsque le rotor (aussi appelé « induit ») est connecté en série avec les deux demi-bobines du stator (aussi appelé « inducteur »). Ce moteur est appelé universel car il fonctionne aussi bien avec du courant alternatif qu'avec du courant continu.

La présente invention ne se limite pas aux moteurs présentant deux demi-bobines mais s'étend, au contraire, à tous les moteurs présentant au moins deux demi-bobines, par exemple quatre.

Pour faciliter la compréhension, les figures 2 à 7 comportent des flèches représentant le sens du courant électrique, suivant l'état des relais.

Côté moteur, on observe deux demi-bobines 48 et 49 du stator montées en série pendant les phases d'activation du moteur, deux balais 50 et 51 du rotor 54.

Dans des modes de réalisation où une grandeur physique de déclenchement du freinage actif est la vitesse de rotation du moteur, un tachymètre, par exemple un générateur tachymétrique, 52 est relié au rotor 54 par une liaison mécanique 53 et fournit un signal représentatif (typiquement proportionnel) de la vitesse de rotation du rotor aux bornes 37 et 38 du bornier.

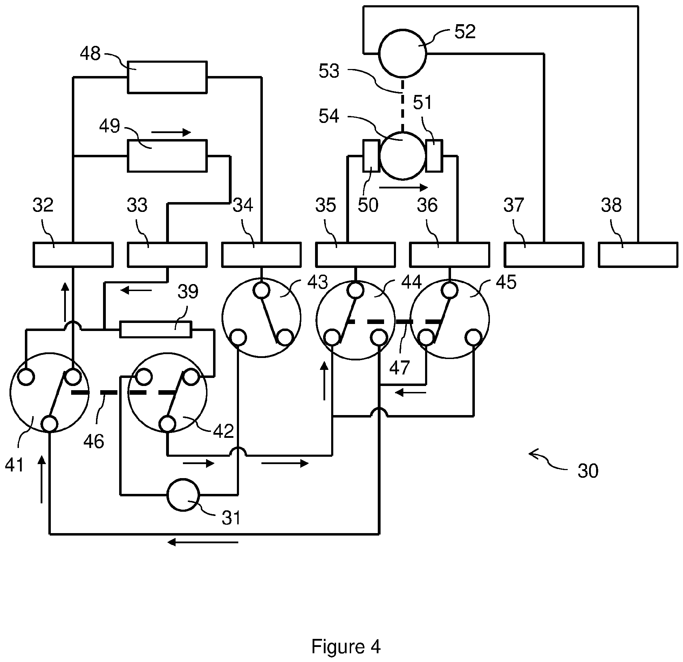

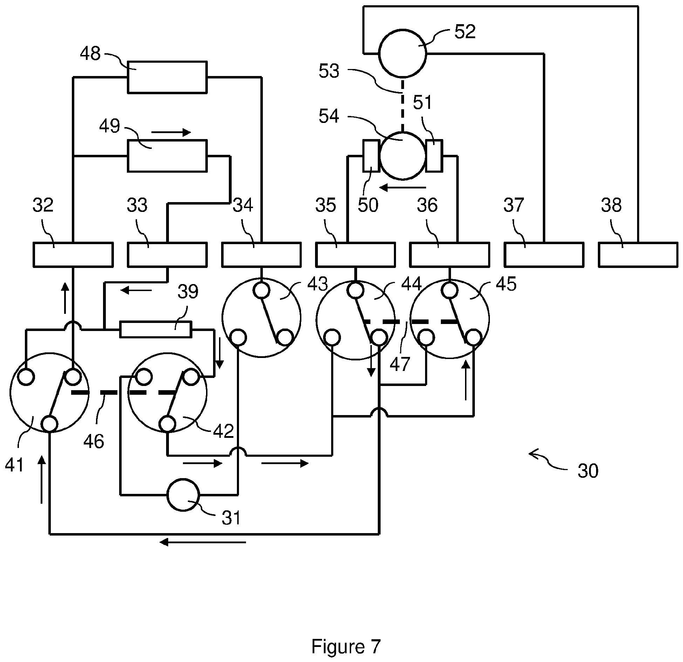

Côté circuit 30, se trouvent deux relais composés de doubles contacts inverseur 41, 42 et 46, d'une part, et 44, 45 et 47, d'autre part. Ce qui signifie que les contacts 41 et 42 commutent simultanément et que les contacts 44 et 45 commutent simultanément. Le relais 43 est un simple contact inverseur. Le relais 43 commande l'alimentation électrique. Le relais 44 et 45 commande le sens de rotation du rotor. Le relais 41, 42 commande la deuxième phase de freinage, comme expliqué en regard des figures 4 et 7.

Une alimentation électrique à tension variable 31 alimente le circuit 30 et ses composants par l'intermédiaire du relais 43. Une résistance 39 est électriquement placée entre une borne du contact inverseur 42, d'une part, et une connexion entre la demi-bobine 49 et une borne du contact inverseur 41, d'autre part. Un microcontrôleur (non représenté) gère les sécurités de l'appareil 10 et l'interface utilisateur, d'une part, et commande la tension variable délivrée par l'alimentation 31, la régulation de vitesse de rotation du rotor 54 et la commutation des relais, d'autre part.

Pour faire tourner le rotor 54 dans le sens horaire, comme illustré en figure 2, le microcontrôleur commande la configuration du relais 43 pour que la demi-bobine 48 soit alimentée, la configuration du relais 41 et 42 pour que la demi-bobine 49 soit en série avec la demi-bobine 48, si bien qu'elle est, elle aussi, alimentée et le relais 44 et 45 pour que la rotation du rotor 54 soit dans le sens horaire. Les deux demi-bobines 48 et 49 et les balais 50 et 51 étant alimentées en série, la rotation du rotor 54 est d'abord accélérée puis stabilisée à une vitesse qui dépend de la résistance mécanique exercée par la préparation culinaire en cours de traitement. Quand la vitesse de rotation est connue par le microcontrôleur grâce au tachymètre 52, ce microcontrôleur peut stabiliser la vitesse à une valeur prédéfinie, en agissant sur la tension aux bornes de l'alimentation électrique 31.

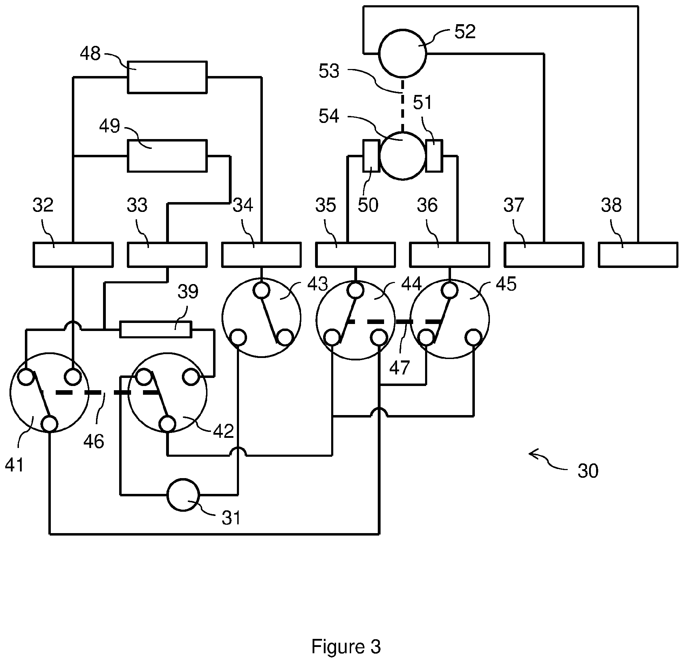

Pour freiner la rotation du rotor 54, si la vitesse de rotation du rotor est supérieure à une valeur prédéterminée, par exemple de 10 000 tours par minutes, dans un premier temps, le microcontrôleur commute la configuration du relais 43 en position ouverte, comme illustré en figure 3. Dès que la vitesse de rotation du rotor 54 est inférieure ou égale à la valeur prédéterminée, le microcontrôleur commute la configuration du relais 41 et 42, comme illustré en figure 4. La demi-bobine 49 se trouve alors électriquement en série avec les balais 50 et 51 du rotor 54. Dans cette configuration, le collecteur du rotor 54 est directement connecté, par l'intermédiaire des balais 50 et 51, sur la seule demi-bobine 49 du stator. Le rotor est alors générateur de tension continue. Cette tension générée par le rotor est injectée dans la demi-bobine 49, ce qui provoque le freinage rapide du rotor 54.

La résistance électrique 39 est la résistance de freinage, qui limite le courant envoyé par le rotor au bobinage du stator. Selon sa valeur la résistance électrique 39 dissipe plus ou moins d'énergie et donc raccourcit plus ou moins la phase de freinage. Par exemple, la valeur de la résistance 39 est de l'ordre de quelques dizaines d'Ohms, par exemple entre 10 et 50 ohms.

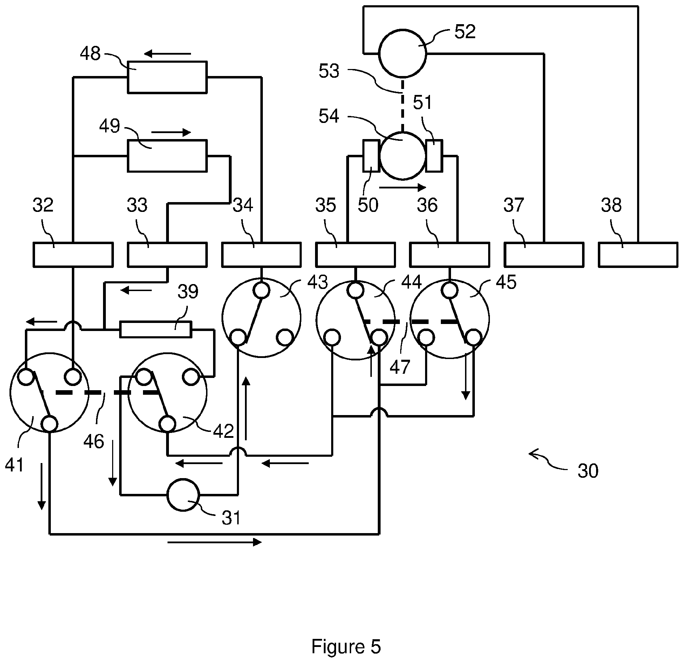

Les figures 5 à 7, qui concernent la rotation anti-horaire du rotor 54, sont respectivement identiques aux figures 2 à 4, à ceci près que le relais 44 et 45 est dans sa configuration opposée. On ne les décrit donc pas plus ici.

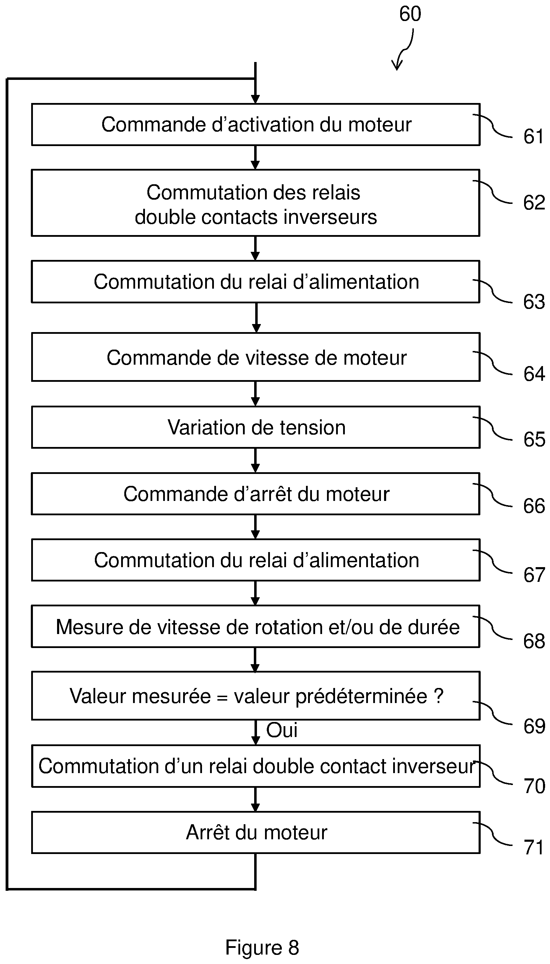

On observe, en figure 8, des étapes d'un mode de réalisation 60 du procédé objet de l'invention. Au cours d'une étape 61, le microcontrôleur commence l'activation du moteur, par exemple sous l'action de l'interface utilisateur, et vérifie que les sécurités de l'appareil permettent le démarrage du moteur. Au cours d'une étape 62, le microcontrôleur commute le relais 44 et 45 selon le sens de rotation recherché et le relais 41 et 42 dans la position illustrée en figures 1 et 4. Au cours d'une étape 63, le microcontrôleur ferme le relais 43, ce qui provoque la mise en rotation du moteur, les deux demi-bobines étant alimentées en série avec les balais du rotor. Au cours d'une étape 64, le microcontrôleur contrôle et asservit la vitesse de rotation du moteur en faisant varier la tension aux bornes de l'alimentation électrique pour stabiliser cette vitesse à la vitesse recherchée. Au cours d'une étape 65, le microcontrôleur peut faire varier la vitesse stabilisée, par exemple au cours de la découpe et du hachage progressif d'aliments.

Au cours d'une étape 66, par exemple provoquée par le déclenchement d'une sécurité, la fin d'un programme de fonctionnement de l'appareil ou une instruction donnée par l'utilisateur par l'intermédiaire de l'interface utilisateur de l'appareil, le microcontrôleur commence le freinage du moteur.

Au cours d'une étape 67, le microcontrôleur commande la commutation du relais 43 pour que le moteur se retrouve en roue libre et freine sous l'effet des frottements, notamment dus à la résistance au mouvement de l'outil dans la cuve.

Au cours d'une étape 68, le microcontrôleur mesure au moins une grandeur physique, vitesse de rotation du moteur et/ou durée écoulée depuis la mise en roue libre du moteur. Au cours d'une étape 69, le microcontrôleur compare la grandeur physique mesurée, vitesse de rotation du moteur et/ou durée écoulée depuis la mise en roue libre du moteur à une valeur limite prédéterminée par mesure.

Dans le cas où la grandeur physique mesurée est la vitesse, au cours de l'étape 69, le microcontrôleur détermine si la vitesse de rotation du moteur est inférieure ou égale à une vitesse prédéterminée, par exemple de 10 000 tours par minute. Si ce n'est pas le cas, l'étape 69 se poursuit. Sinon, au cours d'une étape 70, le microcontrôleur commande la commutation des contacts inverseurs 41 et 42.

Dans le cas où la grandeur physique mesurée est la durée écoulée depuis le début de la mise en roue libre, au cours de l'étape 69, le microcontrôleur détermine si cette durée est supérieure ou égale à une durée prédéterminée, par exemple comprise entre 0,2 seconde et une seconde et demi. Si ce n'est pas le cas, l'étape 69 se poursuit. Sinon, au cours d'une étape 70, le microcontrôleur commande la commutation des contacts inverseurs 41 et 42.

Dans des variantes à décroissance progressive de l'alimentation électrique du moteur, au cours de l'étape 67, le microcontrôleur ne commande pas la commutation du relais 43 mais applique une puissance décroissante, continuellement ou par étages, au moteur électrique. Et, au cours de l'étape 70, le microcontrôleur commande la commutation du relais 43 puis la commutation des contacts inverseurs 41 et 42.

Le moteur s'arrête à l'étape 71 et retourne à l'étape d'attente de démarrage précédent l'étape 61.

On note que, grâce à la mise en oeuvre de l'invention, la durée de freinage complet du moteur, depuis sa vitesse la plus élevée et lorsque la cuve est vide, c'est-à-dire que la préparation culinaire ne participe pas au freinage du moteur, est toujours inférieure à deux secondes et ne produit pas ou peu d'étincelle au niveau des balais.

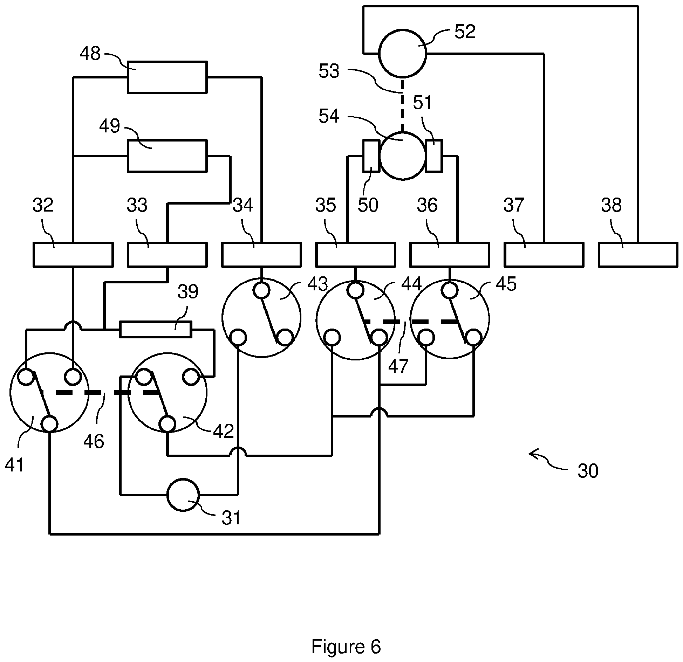

En variante, le microcontrôleur commute le relais 41 et 42 comme illustré en figures 4 et 7, non pas en fonction de la vitesse de rotation du moteur mais en fonction d'une durée écoulée depuis la mise en roue libre du moteur comme illustré en figures 3 et 6. Cette variante permet de garantir que la durée totale de freinage est inférieure à une durée réglementaire. Cette variante a aussi l'avantage de ne pas nécessiter de tachymètre. Elle peut notamment s'appliquer à des appareils de préparation culinaire à vitesse unique, par exemple des moulins à café, à faible coût de revient.

En variante, le microcontrôleur commute le relais 41 et 42 comme illustré en figures 4 et 7 en fonction, d'une part, de la vitesse mesurée et, d'autre part, d'une durée de roue libre.

Bien entendu, les deux relais composés de doubles contact inverseur 41, 42 et 46, d'une part, et 44, 45 et 47, d'autre part peuvent chacun être remplacé par deux relais de type simple contact inverseur synchronisés.

## Revendications

1. Dispositif (19, 30) de freinage d'un moteur électrique (14) comportant un rotor (54) muni de deux balais (50, 51) et un stator comportant au moins deux demi bobines (48, 49) reliées en série avec les balais lors de l'activation nominale du moteur, dispositif **caractérisé en ce qu'**il comporte un moyen (18, 19, 30) de mise en sous-alimentation du moteur, un moyen (41, 42, 46) de liaison, en série, d'une seule demi bobine (49) avec les balais du rotor et un moyen (18) de commande de freinage par la mise en sous-alimentation du moteur jusqu'à ce qu'au moins une valeur d'une grandeur physique atteigne une valeur prédéterminée et la liaison, en série, de ladite seule demi bobine avec les balais du rotor lorsque la valeur d'une grandeur physique atteint la valeur prédéterminée.

2. Dispositif (19, 30) de freinage selon la revendication 1, dans lequel le moyen (18, 19, 30) de mise en sous-alimentation du moteur est configuré pour mettre en roue libre le moteur.

3. Dispositif (19, 30) de freinage selon l'une des revendications 1 ou 2, dans lequel une grandeur physique est la vitesse de rotation du moteur électrique et la valeur prédéterminée est inférieure à la vitesse nominale de rotation du moteur.

4. Dispositif (19, 30) de freinage selon la revendication 3, dans lequel la valeur prédéterminée de la vitesse est supérieure à la moitié de la vitesse de rotation nominale du moteur électrique.

5. Dispositif (19, 30) de freinage selon l'une des revendications 1 à 4, dans lequel une grandeur physique est la durée écoulée depuis la mise en sous-alimentation du moteur électrique.

6. Dispositif (19, 30) de freinage selon la revendication 5, dans lequel la valeur prédéterminée de la durée écoulée depuis la mise en sous-alimentation libre du moteur électrique est comprise entre 0,2 seconde et une seconde et demi.

7. Dispositif (19, 30) de freinage selon l'une des revendications 1 à 6, dans lequel le moyen (19, 30) de liaison, en série, de la seule demi-bobine (49) avec les balais (50, 51) du rotor comporte :
- deux contacts (41, 42) synchronisés à commutation simultanée et
- une résistance (39) électriquement placée entre une borne du contact inverseur (42), d'une part, et une connexion entre une demi-bobine (49) et une borne du contact inverseur (41), d'autre part.

8. Dispositif (19, 30) de freinage selon l'une des revendications 1 à 7, dans lequel le moyen de liaison, en série, de la seule demi-bobine avec les balais du rotor est configuré pour connecter directement un collecteur du rotor (54), par l'intermédiaire des balais (50, 51), sur la seule demi-bobine (49) du stator, le rotor étant alors générateur d'une tension continue injectée dans ladite demi-bobine.

9. Appareil (10) de préparation culinaire comportant un moteur électrique (14) de mise en rotation d'un outil (17) dans une cuve (12) et un dispositif (18, 19, 30) de freinage selon l'une des revendications 1 à 8.

10. Procédé (60) de freinage d'un moteur électrique (14) comportant un rotor muni de deux balais (50, 51) et un stator comportant deux demi-bobines (48, 49) reliées en série avec les balais lors de l'activation nominale du moteur, procédé qui comporte :
- une étape (67, 68) de mise en sous-alimentation du moteur jusqu'à ce qu'au moins une valeur d'une grandeur physique atteigne une valeur prédéterminée et
- une étape (70) de liaison, en série, d'une seule demi-bobine (49) avec les balais du rotor lorsqu'une valeur de grandeur physique atteint la valeur prédéterminée.

## Patentansprüche

1. Bremsvorrichtung (19, 30) eines Elektromotors (14), der einen Rotor (54) mit zwei Bürsten (50, 51) und einen Stator mit mindestens zwei Halbspulen (48, 49) aufweist, die bei Nennaktivierung des Motors in Reihe mit den Bürsten verbunden sind, wobei die Vorrichtung **dadurch gekennzeichnet ist, dass** sie ein Mittel (18, 19, 30) zur Unterversorgung des Motors, ein Mittel (41, 42, 46) zur Verbindung in Reihe einer einzigen Halbspule (49) mit den Rotorbürsten und ein Mittel (18) zur Bremssteuerung durch Unterversorgung des Motors aufweist, bis mindestens ein Wert einer physikalischen Größe einen vorbestimmten Wert erreicht und die Verbindung in Reihe der einzigen Halbspule mit den Rotorbürsten, wenn der Wert einer physikalischen Größe den vorbestimmten Wert erreicht.

2. Bremsvorrichtung (19, 30) nach Anspruch 1, wobei das Mittel (18, 19, 30) zur Unterversorgung des Motors dazu ausgelegt ist, den Motor in den Freilauf zu versetzen.

3. Bremsvorrichtung (19, 30) nach einem der Ansprüche 1 oder 2, wobei eine physikalische Größe die Drehzahl des Elektromotors ist und der vorbestimmte Wert kleiner als die Nenndrehzahl des Motors ist.

4. Bremsvorrichtung (19, 30) nach Anspruch 3, wobei der vorbestimmte Wert der Geschwindigkeit größer als die Hälfte der Nenndrehzahl des Elektromotors ist.

5. Bremsvorrichtung (19, 30) nach einem der Ansprüche 1 bis 4, wobei eine physikalische Größe die Zeit ist, die seit der Unterversorgung des Elektromotors vergangen ist.

6. Bremsvorrichtung (19, 30) nach Anspruch 5, wobei der vorbestimmte Wert der seit der freien Unterversorgung des Elektromotors verstrichenen Zeit zwischen 0,2 Sekunden und eineinhalb Sekunden liegt.

7. Bremsvorrichtung (19, 30) nach einem der Ansprüche 1 bis 6, wobei das Mittel (19, 30) zur Verbindung in Reihe der einzigen Halbspule (49) mit den Bürsten (50, 51) des Rotors aufweist:
- zwei synchronisierte, gleichzeitig schaltende Kontakte (41, 42) und
- einen Widerstand (39), der elektrisch zwischen einer Klemme des Wechselkontakts (42) einerseits und einer Verbindung zwischen einer Halbspule (49) und einer Klemme des Wechselkontakts (41) andererseits angeordnet ist.

8. Bremsvorrichtung (19, 30) nach einem der Ansprüche 1 bis 7, wobei das Mittel zur Verbindung in Reihe der einzigen Halbspule mit den Rotorbürsten dazu ausgelegt ist, einen Kollektor des Rotors (54) über die Bürsten (50, 51) direkt mit der einzigen Halbspule (49) des Stators zu verbinden, wobei der Rotor dann eine Gleichspannung erzeugt, die in die Halbspule eingespeist wird.

9. Kochzubereitungsgerät (10) mit einem Elektromotor (14) zum Drehen eines Werkzeugs (17) in einem Becken (12) und einer Bremsvorrichtung (18, 19, 30) nach einem der Ansprüche 1 bis 8.

10. Verfahren (60) zum Bremsen eines Elektromotors (14), der einen Rotor mit zwei Bürsten (50, 51) und einen Stator mit zwei Halbspulen (48, 49) aufweist, die bei Nennaktivierung des Motors in Reihe mit den Bürsten verbunden sind, wobei das Verfahren aufweist:
- ein Schritt (67, 68) der Unterversorgung des Motors, bis mindestens ein Wert einer physikalischen Größe einen vorbestimmten Wert erreicht und
- einen Schritt (70) der Verbindung in Reihe einer einzelnen Halbspule (49) mit den Rotorbürsten, wenn ein Wert einer physikalischen Größe den vorbestimmten Wert erreicht.

## Claims

1. Device (19, 30) for braking an electric motor (14) comprising a rotor (54) provided with two brushes (50, 51) and a stator comprising at least two half-coils (48, 49) connected in series to the brushes while the motor is nominally activated, which device is **characterized in that** it comprises a means (18, 19, 30) for underpowering the motor, a means (41, 42, 46) for connecting in series a single half-coil (49) to the rotor brushes and a means (18) for controlling the braking by underpowering the motor until at least one value of a physical quantity reaches a predetermined value, and for connecting in series said single half-coil to the rotor brushes when the value of a physical quantity reaches the predetermined value.

2. Braking device (19, 30) according to claim 1, wherein the means (18, 19, 30) for underpowering the motor is configured to freewheel the motor.

3. Braking device (19, 30) according to one of claims 1 or 2, wherein one physical quantity is the rotational speed of the electric motor and the predetermined value is below the nominal rotational speed of the motor.

4. Braking device (19, 30) according to claim 3, wherein the predetermined value for the speed is higher than half the nominal rotational speed of the electric motor.

5. Braking device (19, 30) according to one of claims 1 to 4, wherein one physical quantity is the time elapsed since the electric motor was underpowered.

6. Braking device (19, 30) according to claim 5, wherein the predetermined value for the time elapsed since the electric motor was underpowered by freewheeling is between 0.2 seconds and 1.5 seconds.

7. Braking device (19, 30) according to one of claims 1 to 6, wherein the means (19, 30) for connecting in series the single half-coil (49) to the rotor brushes (50, 51) comprises:
- two synchronised simultaneous changeover contacts (41, 42); and
- a resistor (39) electrically placed between one terminal of the changeover contact (42), on the one hand, and a connection between one half-coil (49) and one terminal of the changeover contact (41), on the other hand.

8. Braking device (19, 30) according to one of claims 1 to 7, wherein the means for connecting in series the single half-coil to the rotor brushes is configured to directly connect a commutator of the rotor (54), by means of brushes (50, 51), to said single half-coil (49) of the stator, the rotor then being a generator of a direct current that is injected into said half-coil.

9. Cooking appliance (10) comprising an electric motor (10) for setting in rotation a tool (17) in a bowl (12), and a braking device (18, 19, 30) according to one of claims 1 to 8.

10. Method (60) for braking an electric motor (14) comprising a rotor provided with two brushes (50, 51) and a stator comprising two half-coils (48, 49) connected in series to the brushes while the motor is nominally activated, which method comprises:
- a step (67, 68) of underpowering the motor until at least one value of a physical quantity reaches a predetermined value; and
- a step (70) of connecting in series a single half-coil (49) to the rotor brushes when a value of a physical quantity reaches the predetermined value.
